# FASCICULE DE BREVET EUROPEEN

(11) **EP 4 255 266 B1**
(45) Date de publication et mention de la délivrance du brevet: **22.01.2025**
(21) Numéro de dépôt: 21823509.1
(22) Date de dépôt: 29.11.2021
(51) Int. Cl.: A47J 43/07, A47J 43/08, A47J 43/044

(54) **BOITIER D'APPAREIL ELECTROMENAGER DE PREPARATION CULINAIRE MULTIFONCTIONS TENU A LA MAIN**
GEHÄUSE FÜR EIN MULTIFUNKTIONALES TRAGBARES HAUSHALTS-LEBENSMITTELZUBEREITUNGSGERÄT
HOUSING FOR A HANDHELD MULTIFUNCTION DOMESTIC FOOD PREPARATION APPLIANCE

(30) Priorité: 01.12.2020 FR 2012501
(43) Date de publication de la demande: 11.10.2023
(73) Titulaire: SEB S.A., 69130 Ecully (FR)
(72) Inventeur: MARTIN, Philippe, 53240 ANDOUILLE (FR); GRUAU, Frédéric, 53000 LAVAL (FR); GRASSIN, Stéphane, 53100 MOULAY (FR)
(74) Mandataire: SEB Développement
(86) Numéro de dépôt international: PCT/EP2021/083374
(87) Numéro de publication internationale: WO 2022/117505

(56) Documents cités:
- EP-A1- 2 623 000
- EP-A2- 1 733 665
- WO-A1-96/25081
- FR-A1- 2 794 960

## Description

### Domaine technique

La présente invention concerne le domaine technique des appareils électroménagers de préparation culinaire multifonctions.

La présente invention se rapporte plus particulièrement aux appareils électroménagers de préparation d'aliments multifonctions comportant un boîtier motorisé prévu pour être tenu à la main et comportant plusieurs types de sorties d'entrainement configurées pour être utilisées soit avec des outils de travail rotatifs amovibles soit avec des accessoires de travail amovibles.

### Etat de la technique

Il est connu du document WO 96/25081 A1 un appareil du type précité dont le boîtier motorisé présente une ouverture arrière prévue pour le montage d'un accessoire de mixage. Ce document propose de monter l'accessoire de mixage dans un fut cylindrique porté par le moteur électrique. Ainsi l'extrémité de l'accessoire de mixage engagée dans le boîtier présente une section relativement réduite. Un inconvénient de la réalisation précitée réside dans le fait que l'axe de l'accessoire de mixage doit être correctement aligné avec l'axe de la sortie d'entraînement, pour permettre le montage de l'accessoire de mixage. Le montage de l'accessoire de mixage peut s'avérer malaisé.

### Résumé de l'invention

La présente invention vise à remédier à cet inconvénient. Le problème technique à la base de l'invention consiste à faciliter le montage d'un accessoire de travail amovible comportant un élément de connexion et un organe d'entraînement rotatif, tel qu'un accessoire de mixage, sur un boîtier motorisé d'appareil électroménager de préparation culinaire multifonctions prévu pour être tenu à la main.

Un objet de l'invention vise à proposer un boîtier d'appareil électroménager de préparation culinaire multifonctions prévu pour être tenu à la main, dans lequel le montage d'un accessoire de travail amovible comportant un élément de connexion et un organe d'entraînement rotatif est facilité.

Un objet additionnel de l'invention vise à proposer un boîtier d'appareil électroménager de préparation culinaire multifonctions prévu pour être tenu à la main, dans lequel le montage d'un accessoire de travail amovible comportant un élément de connexion et un organe d'entraînement rotatif est facilité, et dont la construction reste simple à réaliser.

Un autre objet de l'invention vise à proposer un appareil électroménager de préparation culinaire multifonctions comportant un boîtier prévu pour être tenu à la main et un accessoire de travail amovible comportant un élément de connexion et un organe d'entraînement rotatif, dans lequel le montage de l'accessoire de travail amovible dans le boîtier est facilité.

Un autre objet additionnel de l'invention vise à proposer un appareil électroménager de préparation culinaire multifonctions comportant un boîtier prévu pour être tenu à la main et un accessoire de travail amovible comportant un élément de connexion et un organe d'entraînement rotatif, dans lequel le montage de l'accessoire de travail amovible dans le boîtier est facilité, et dont la construction reste simple à réaliser.

Ces objets sont atteints avec un boîtier d'appareil électroménager de préparation culinaire multifonctions prévu pour être tenu à la main, logeant un moteur électrique, le boîtier présentant au moins une et de préférence deux première(s) sortie(s) d'entraînement entrainée(s) par le moteur électrique et configurée(s) pour entraîner (chacune) un outil de travail rotatif amovible, le boîtier présentant une ouverture configurée pour le montage d'un accessoire de travail amovible, le boîtier présentant des organes de retenue configurés pour venir en prise avec un élément de connexion de l'accessoire de travail monté dans l'ouverture, le boîtier présentant une deuxième sortie d'entraînement entraînée par le moteur électrique et configurée pour entraîner un organe d'entraînement rotatif de l'accessoire de travail monté dans l'ouverture, du fait que les organes de retenue sont agencés sur une partie externe d'une protubérance agencée à l'intérieur du boîtier autour de la deuxième sortie d'entraînement et que les organes de retenue sont configurés pour venir en prise avec une partie interne de l'élément de connexion. Ces dispositions permettent de loger les organes de retenue dans le boîtier tout en facilitant la mise en place de l'élément de connexion dans le boîtier. L'élément de connexion peut être engagé dans l'ouverture autour de la protubérance puis être guidé par la protubérance lors de la poursuite de l'engagement.

La protubérance peut présenter une extrémité tronconique. Cette disposition permet de faciliter le guidage de l'élément de connexion.

Les organes de retenue peuvent être portés par une pièce de structure agencée dans le boîtier derrière l'ouverture. Cette disposition permet de faciliter la réalisation du boîtier et de simplifier sa construction.

La deuxième sortie d'entraînement peut traverser la pièce de structure. Cette disposition permet d'améliorer la tenue mécanique de la pièce de structure, par rapport à une pièce de structure présentant une encoche pour le passage de la deuxième sortie d'entraînement, ou des dimensions plus restreintes ménageant un espace pour le passage de la deuxième sortie d'entraînement, ce qui contribue à simplifier la construction du boîtier.

L'extrémité tronconique peut être formée par un cache annulaire monté sur la pièce de structure. Cette disposition permet de faciliter la réalisation du boîtier et de simplifier sa construction.

La pièce de structure peut former une cavité débouchant dans l'ouverture, les organes de retenue étant agencés dans la cavité. Cette disposition permet de faciliter la réalisation du boîtier et de simplifier sa construction.

La pièce de structure peut former une glissière sur laquelle coulisse une trappe susceptible d'occuper une position ouverte dans laquelle l'ouverture est dégagée et une position fermée dans laquelle l'ouverture est obturée par la trappe. Cette disposition permet de cacher la deuxième sortie d'entraînement, tout en conservant une réalisation simple.

La glissière peut présenter des nervures de guidage, et la trappe peut présenter des encoches de guidage coulissant sur les nervures de guidage lorsque la trappe est déplacée entre la position ouverte et la position fermée, ou vice-versa. Cette disposition permet de faciliter le déplacement de la trappe, tout en conservant une réalisation simple.

La pièce de structure peut s'étendre dans un montant arrière du boîtier. Cette disposition permet de faciliter la réalisation de la trappe montée coulissante.

Le boîtier peut présenter une poignée s'étendant à partir du montant arrière. Cette disposition permet de faciliter l'utilisation du boîtier.

Le boîtier peut comporter deux demi-coques extérieures, la pièce de structure étant alors maintenue entre les deux demi-coques extérieures assemblées. Cette disposition permet de faciliter la réalisation du boîtier.

Ces objets sont également atteints avec un appareil électroménager de préparation culinaire multifonctions comportant un boîtier prévu pour être tenu à la main et un accessoire de travail amovible configuré pour être monté dans le boîtier, l'accessoire de travail comprenant un organe d'entraînement rotatif et un élément de connexion, du fait que le boîtier est conforme à l'une au moins des caractéristiques précitées. Ces dispositions permettent de faciliter la réalisation de l'appareil électroménager de préparation culinaire multifonctions.

La partie interne peut présenter des organes d'accrochage internes venant en prise avec les organes de retenue lorsque l'accessoire de travail est monté dans l'ouverture. Cette disposition permet de simplifier la réalisation de l'accessoire de travail.

La partie interne peut appartenir à une paroi annulaire de l'élément de connexion. Cette disposition permet de simplifier la réalisation de l'accessoire de travail tout en améliorant sa robustesse.

La paroi annulaire peut coiffer la protubérance lorsque l'accessoire de travail est monté dans l'ouverture. Cette disposition permet de simplifier la mise en place de l'accessoire de travail dans le boîtier.

### Brève description des figures

On comprendra mieux les buts, aspects et avantages de la présente invention, d'après la description donnée ci-après d'un mode particulier de réalisation de l'invention présenté à titre d'exemple non limitatif, et de variantes, en se référant aux dessins annexés dans lesquels :
[Fig 1] La figure 1 est une vue en coupe longitudinale d'un exemple de réalisation d'un appareil électroménager de préparation culinaire multifonctions comportant un boîtier prévu pour être tenu à la main selon l'invention, deux outils de travail rotatifs amovibles et un accessoire de travail amovible ;
[Fig 2] La figure 2 est une vue en perspective arrière de l'appareil illustré sur la figure 1, dans laquelle l'accessoire de travail est démonté du boîtier ;
[Fig 3] La figure 3 est une vue partielle en perspective de l'accessoire de travail illustré sur les figures 1 et 2 ;
[Fig 4] La figure 4 est une vue partielle en perspective arrière du boîtier illustré sur les figures 1 et 2 ;
[Fig 5] La figure 5 est une vue partielle en perspective arrière et en coupe partielle du boîtier illustré sur les figures 1, 2 et 4 ;
[Fig 6] La figure 6 est une vue partielle en perspective arrière du boîtier illustré sur les figures 1, 2, 4 et 5, dans laquelle un capot a été retiré ;
[Fig 7] La figure 7 est une vue en perspective montrant l'accessoire de travail amovible illustré sur les figures 1 à 3 monté sur le boîtier illustré sur les figures 1, 2 et 4 à 6, dans laquelle une demi-coque du boîtier n'est pas représentée,
[Fig 8] La figure 8 est une vue en perspective d'une variante de réalisation du boîtier illustré sur les figures 1, 2 et 4 à 7, dans laquelle une demi-coque du boîtier n'est pas représentée, et dans laquelle le boîtier comporte une trappe d'obturation interne coulissante représentée en position ouverte,
[Fig 9] La figure 9 est une vue en perspective de la variante de réalisation du boîtier illustré sur la figure 8, selon une autre orientation, dans laquelle une demi-coque du boîtier n'est pas représentée, et dans laquelle la trappe d'obturation interne coulissante est représentée en position ouverte,
[Fig 10] La figure 10 est une vue en perspective de la variante de réalisation du boîtier sur les figures 8 et 9, selon l'orientation de la figure 8, dans laquelle une demi-coque du boîtier n'est pas représentée, et dans laquelle la trappe d'obturation interne coulissante est représentée en position fermée.

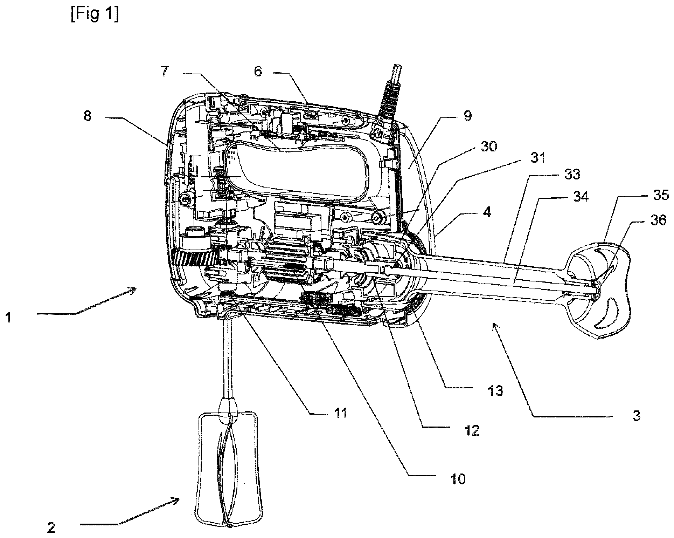

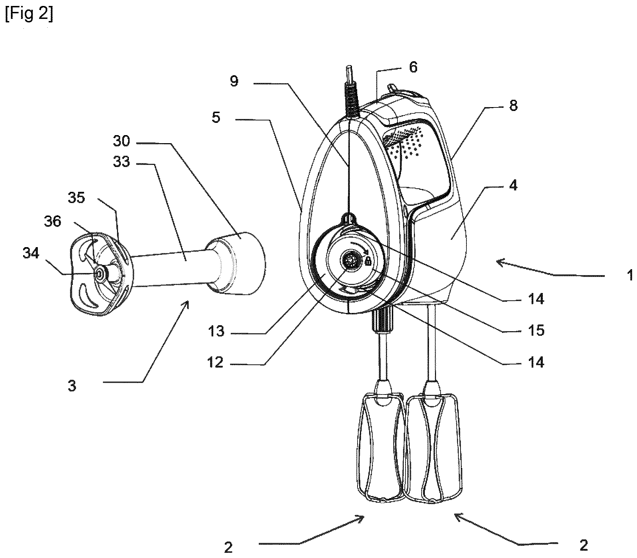

Les figures 1 et 2 illustrent un exemple de réalisation d'un appareil électroménager de préparation culinaire multifonctions comportant un boîtier 1 prévu pour être tenu à la main, des outils de travail rotatifs 2 amovibles, et un accessoire de travail 3 amovible.

Les outils de travail rotatifs 2 représentés sur les figures 1 et 2 sont des fouets pour émulsionner ou monter les blancs d'oeuf en neige.

L'accessoire de travail 3 représenté sur les figures 1 et 2 est un pied de mixage. L'accessoire de travail 3 comporte un fut allongé 33 logeant un arbre 34. L'une des extrémités du fut allongé 33 forme un élément de connexion 30 configuré pour être monté dans le boîtier 1. L'élément de connexion 30 entoure un organe d'entraînement rotatif 31 ménagé à l'une des extrémités de l'arbre 34 L'autre extrémité du fut allongé 33 forme une cloche ouverte 35 entourant un couteau 36 monté à l'autre extrémité de l'arbre 34.

Tel que visible sur la figure 1, le boîtier 1 loge un moteur électrique 10. Dans l'exemple de réalisation illustré sur les figures, le boîtier 1 comporte deux demi-coques extérieures 4 ; 5 assemblées entre elles par vissage et/ou par clipsage.

Le boîtier 1 présente une poignée 6 configurée pour une utilisation du boîtier 1 avec les outils de travail rotatifs 2 ou avec l'accessoire de travail 3. Dans l'exemple de réalisation illustré sur les figures, la poignée 6 est une poignée fermée. La poignée 6 présente une zone de préhension 7 allongée. La poignée 6 s'étend entre un montant avant 8 et un montant arrière 9 du boîtier 1. La poignée 6 est reliée à la partie principale du boîtier 1 logeant le moteur électrique 10 par le montant avant 8 et par le montant arrière 9. A titre de variante, la poignée 6 pourrait notamment être une poignée ouverte reliée par un seul montant à la partie principale du boîtier 1 logeant le moteur électrique 10.

Le boîtier 1 présente deux premières sorties d'entraînement 11, dont une seule est visible sur la figure 1. Les deux premières sorties d'entraînement 11 sont entrainée(s) par le moteur électrique 10 et sont configurée(s) pour entraîner l'un des outils de travail rotatifs 2. Un dispositif de transmission à renvoi d'angle est agencé entre le moteur électrique 10 et les deux premières sorties d'entraînement 11. De préférence, le dispositif de transmission forme également un dispositif de réduction de vitesse.

Tel que mieux visible sur la figure 2, le boîtier 1 présente une ouverture 13 configurée pour le montage de l'accessoire de travail 3. L'ouverture 13 est ménagée sur une face arrière du boîtier 1. L'ouverture 13 est agencée en regard du moteur électrique 10. Le boîtier 1 présente une deuxième sortie d'entraînement 12 entraînée par le moteur électrique 10. De préférence, la deuxième sortie d'entraînement 12 est agencée dans l'axe du moteur électrique 10 et est entrainée en prise directe par le moteur électrique 10.

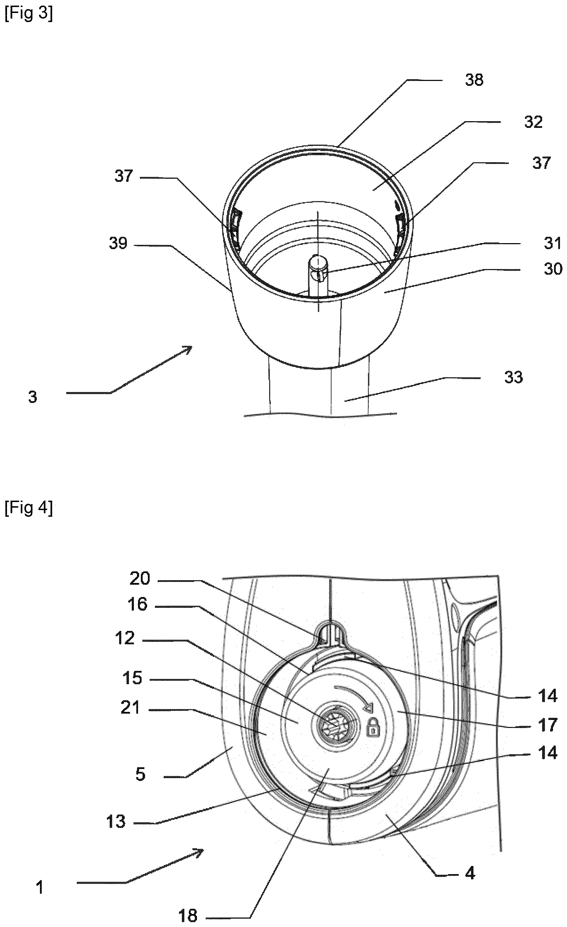

La figure 3 montre une partie interne 32 de l'élément de connexion 30. L'élément de connexion 30 est configuré pour être monté dans l'ouverture 13 du boîtier 1, tel que représenté sur la figure 1. La partie interne de l'élément de connexion 30 présente des organes d'accrochage internes 37. L'organe d'entraînement rotatif 31 est configuré pour être entraîné par la deuxième sortie d'entraînement 12 lorsque l'élément de connexion 30 est monté dans l'ouverture 13 du boîtier 1. Les organes d'accrochage internes 37 sont configurés pour venir en prise dans le boîtier 1 lorsque l'accessoire de travail 3 est monté dans l'ouverture 13.

Dans l'exemple de réalisation illustré sur les figures, l'élément de connexion 30 présente un bord annulaire 38 et une paroi annulaire 39. La partie interne 32 de l'accessoire de travail 3 venant en prise avec les organes de retenue 14 appartient à la paroi annulaire 39. Les organes d'accrochage internes 37 sont agencés à l'intérieur de la paroi annulaire 39. Dans l'exemple de réalisation illustré sur les figures, deux organes d'accrochage internes 37 sont agencés de manière opposée à l'intérieur de la paroi annulaire 39.

La deuxième sortie d'entraînement 12 est configurée pour entraîner l'organe d'entraînement rotatif 31 de l'accessoire de travail 3 monté dans l'ouverture 13.

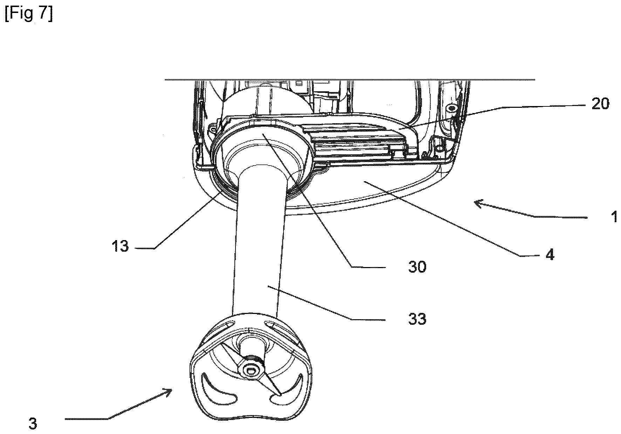

Le boîtier 1 présente des organes de retenue 14, mieux visibles sur les figures 4 à 7. Les organes de retenue 14 sont agencés dans le boîtier 1 et sont accessibles par l'ouverture 13. Les organes de retenue sont configurés pour venir en prise avec l'élément de connexion 30 de l'accessoire de travail 3 monté dans l'ouverture 13. Plus particulièrement, les organes de retenue 14 sont configurés pour venir en prise par rotation avec l'élément de connexion 30. Les organes de retenue 14 sont configurés pour venir en prise par rotation avec les organes d'accrochage internes 37 lorsque l'élément de connexion 30 est monté dans l'ouverture 13.

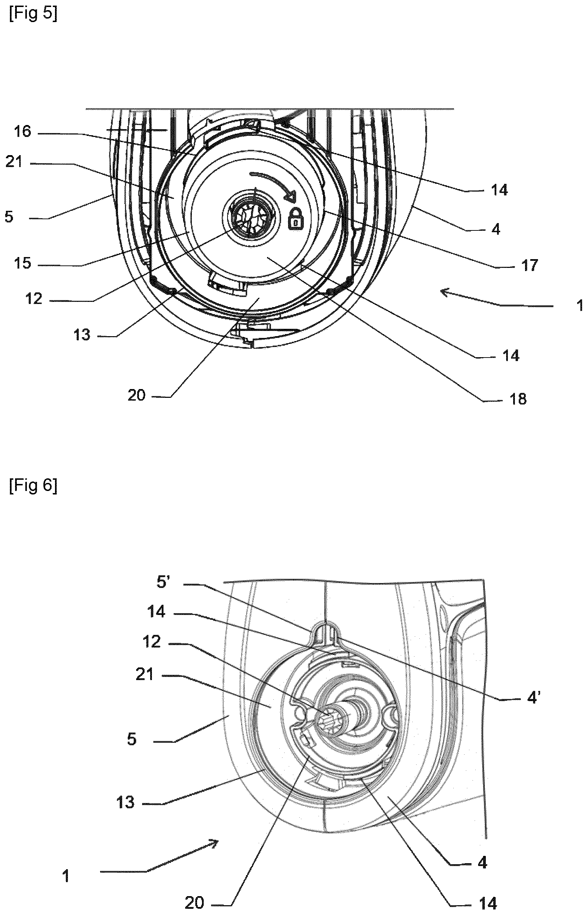

Tel que mieux visible sur les figures 4 et 5, les organes de retenue 14 sont agencés sur une partie externe 16 d'une protubérance 15 agencée à l'intérieur du boîtier 1 autour de la deuxième sortie d'entraînement 12. La protubérance 15 présente une extrémité tronconique 17. Dans l'exemple de réalisation illustré sur les figures, deux organes de retenue 14 sont agencés de manière opposée à l'intérieur à l'intérieur du boîtier 1 autour de la deuxième sortie d'entraînement 12.

Le boîtier 1 loge une pièce de structure 20, mieux visible sur les figures 5 6 et 7. La pièce de structure 20 est agencée dans le boîtier 1 derrière l'ouverture 13. La pièce de structure 20 forme une cavité 21 débouchant dans l'ouverture 13, visible sur les figures 2 à 4. Tel que visible sur les figures 2 à 5, les organes de retenue 14 sont portés par la pièce de structure 20. Les organes de retenue 14 sont agencés dans la cavité 21. Dans l'exemple de réalisation illustré sur les figures, la pièce de structure 20 est fixée sur le moteur électrique 10.

Dans l'exemple de réalisation illustré sur les figures, l'extrémité tronconique 17 est formée par un cache annulaire 18. Tel que visible sur la figure 5, le cache annulaire 18 est monté sur la pièce de structure 20. Sur la figure 6 le cache annulaire 18 a été retiré. Tel que visible sur la figure 6, la deuxième sortie d'entraînement 12 traverse la pièce de structure 20. Dans l'exemple de réalisation illustré sur la figure 6, la pièce de structure 20 entoure la deuxième sortie d'entrainement 12. A titre de variante la pièce de structure 20 pourrait notamment présenter une encoche ou une échancrure ménageant un passage pour la deuxième sortie d'entrainement 12.

Un dispositif d'obturation de l'ouverture 13 peut être prévu pour cacher la deuxième sortie d'entraînement 12 lorsque l'accessoire de travail 3 n'est pas monté dans le boîtier 1.

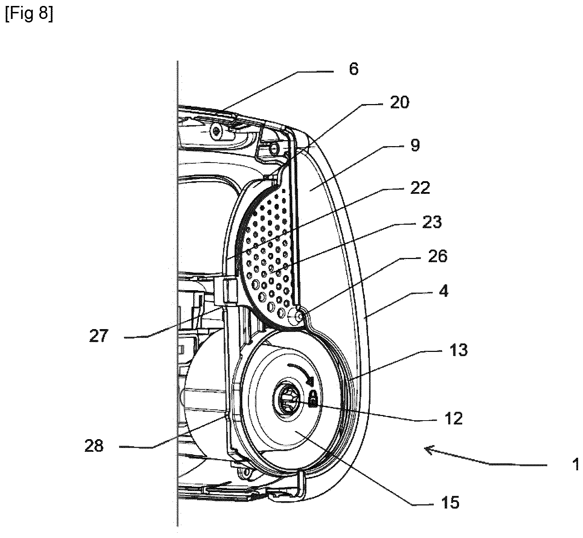

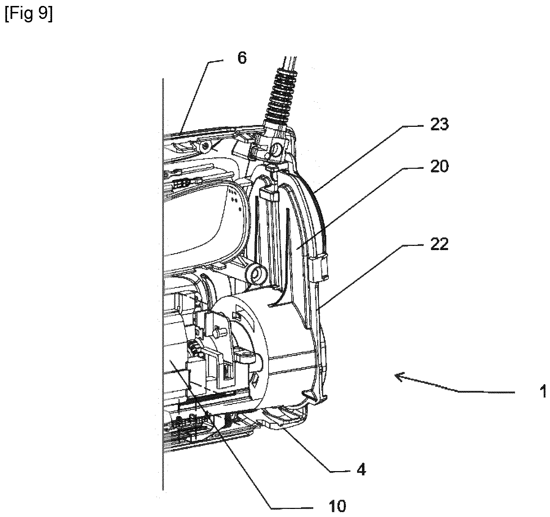

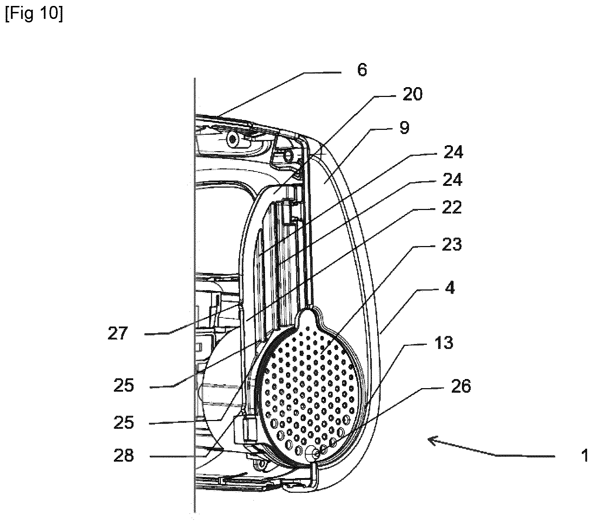

Dans la variante de réalisation illustrée sur les figures 8 à 10, une trappe 23 coulissante est montée dans le boîtier 1. La trappe 23 est montée mobile entre une position ouverte, représentée sur les figures 8 et 9, et une position fermée, représentée sur la figure 10. Dans la position ouverte, l'ouverture 13 est dégagée. L'accessoire de travail 3 peut être mis en place dans le boîtier 1. Dans la position fermée, l'ouverture 13 est obturée par la trappe 23. L'accessoire de travail 3 ne peut pas être mis en place dans le boîtier 1.

La pièce de structure 20 forme une glissière 22 sur laquelle coulisse la trappe 23. La pièce de structure 20 s'étend dans le montant arrière 9. Ainsi la trappe 23 est agencée à l'intérieur du boîtier 1. Dans l'exemple de réalisation illustré sur les figures, la pièce de structure 20 est maintenue entre les deux demi-coques extérieures 4 ; 5 assemblées. La figure 9 montre la pièce de structure 20 agencée dans l'une demi-coques extérieures 4. Plus particulièrement, la pièce de structure 20 est agencée entre l'extrémité arrière des deux demi-coques extérieures 4, 5 et le moteur électrique 10.

La trappe 23 peut présenter un organe de manoeuvre 26. De préférence, l'organe de manoeuvre 26 est proéminent. De manière préférée, l'organe de manoeuvre 26 est adjacent à l'ouverture 13 lorsque la trappe 23 occupe la position ouverte, tel que visible sur la figure 8. Cette disposition permet de rétracter la majeure partie de la trappe 23 dans le boîtier 1. A cet effet, les deux demi-coques extérieures 4 ; 5 peuvent présenter chacune une échancrure 4' ; 5', tel que visible sur la figure 6. Ces échancrures 4',5' sont prévues pour loger une partie de l'organe de manoeuvre 26 lorsque la trappe 23 occupe la position ouverte.

Tel que mieux visible sur la figure 10, la glissière 22 présente des nervures de guidage 24, et la trappe 23 présente des encoches de guidage 25. Lorsque la trappe 23 est déplacée entre la position ouverte et la position fermée, ou vice-versa, les encoches de guidage 25 coulissent sur les nervures de guidage 24. La glissière 22 peut présenter des protubérances 27, 28 formant des points durs pour maintenir la trappe 23 en position ouverte, tel que visible sur la figure 8, ou en position fermée, tel que visible sur la figure 10.

Le boîtier 1 illustré sur les figures 8 à 10 peut être utilisé de la manière suivante avec l'accessoire de travail 3 illustré sur les figures 1 à 3. L'utilisateur relève la trappe 23 pour dégager l'ouverture 13. L'utilisateur insère ensuite l'élément de connexion 30 dans l'ouverture 13 en engageant le bord annulaire 38 de l'élément de connexion 30 autour de la protubérance 15. Ainsi la protubérance 15 guide l'insertion de l'accessoire de travail 3. Le bord annulaire 38 arrive en butée dans la cavité 21. La protubérance 15 est coiffée par la paroi annulaire 39. L'utilisateur tourne ensuite l'accessoire de travail 3 par rapport au boîtier 1 pour amener les organes d'accrochage internes 37 en prise avec les organes de retenue 14.

Dans l'exemple de réalisation illustré sur les figures, les organes d'accrochage internes 37 et les organes de retenue 14 appartiennent à un dispositif de verrouillage de type baïonnette. A titre de variante, les organes d'accrochage internes 37 et les organes de retenue 14 pourraient notamment appartenir à un dispositif de verrouillage à vis, si désiré de type quart de tour.

Pour retirer l'accessoire de travail 3, l'utilisateur tourne l'accessoire de travail 3 par rapport au boîtier 1 dans le sens inverse pour dégager les organes d'accrochage internes 37 des organes de retenue 14. Après avoir retiré l'accessoire de travail 3, l'utilisateur peut descendre la trappe 23 pour obturer l'ouverture 13.

A titre de variante, la trappe 23 prévue pour obturer l'ouverture 13 n'est pas nécessairement agencée à l'intérieur du boîtier 1. Si désiré la trappe 23 peut notamment être agencée à l'extérieur du boîtier 1.

A titre de variante, la trappe 23 prévue pour obturer l'ouverture 13 n'est pas nécessairement montée coulissante sur une pièce de structure 20 agencée à l'intérieur du boîtier 1. Si désiré la trappe 23 peut notamment être montée coulissante sur l'une des ou les demi-coques extérieures 4, 5.

A titre de variante, la trappe 23 prévue pour obturer l'ouverture 13 n'est pas nécessairement montée coulissante. La trappe 23 peut notamment être monté pivotante sur ou dans le boîtier 1.

A titre de variante, l'ouverture 13 peut être obturée par un bouchon monté amovible. Si désiré, le bouchon peut venir en prise avec les organes de retenue 14 est être monté sur le boîtier 1 de manière similaire à l'accessoire de travail 3.

A titre de variante, le boîtier 1 peut présenter au moins une et de préférence deux première(s) sortie(s) d'entraînement 11 entrainée(s) par le moteur électrique 10, la ou les première(s) sortie(s) d'entraînement 11 étant configurée(s) pour entraîner chacune un outil de travail rotatif 2 amovible.

A titre de variante, d'autres types d'outils de travail rotatifs 2 peuvent être envisagés. Les outils de travail rotatifs 2 ne sont pas nécessairement des fouets, mais peuvent notamment être des crochets de pétrissage.

A titre de variante, d'autres types d'accessoire de travail 3 peuvent être envisagés. L'accessoire de travail 3 n'est pas nécessairement un pied de mixage, mais peut notamment être un accessoire presse-purée, ou un accessoire pour broyer les glaçons.

Bien entendu, l'invention n'est nullement limitée au mode de réalisation décrit et illustré, et à ses variantes, qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Boîtier (1) d'appareil électroménager de préparation culinaire multifonctions prévu pour être tenu à la main, logeant un moteur électrique (10), le boîtier (1) présentant au moins une et de préférence deux première(s) sortie(s) d'entraînement (11) entrainée(s) par le moteur électrique (10) et configurée(s) pour entraîner (chacune) un outil de travail rotatif (2) amovible, le boîtier (1) présentant une ouverture (13) configurée pour le montage d'un accessoire de travail (3) amovible, le boîtier (1) présentant des organes de retenue (14) configurés pour venir en prise avec un élément de connexion (30) de l'accessoire de travail (3) monté dans l'ouverture (13), le boîtier (1) présentant une deuxième sortie d'entraînement (12) entraînée par le moteur électrique (10) et configurée pour entraîner un organe d'entraînement rotatif (31) de l'accessoire de travail (3) monté dans l'ouverture (13), **caractérisé en ce que** les organes de retenue (14) sont agencés sur une partie externe (16) d'une protubérance (15) agencée à l'intérieur du boîtier (1) autour de la deuxième sortie d'entraînement (12) et **en ce que** les organes de retenue (14) sont configurés pour venir en prise avec une partie interne (32) de l'élément de connexion (30).

2. Boîtier (1) d'appareil électroménager de préparation culinaire multifonctions prévu pour être tenu à la main selon la revendication 1, **caractérisé en ce que** la protubérance (15) présente une extrémité tronconique (17).

3. Boîtier (1) d'appareil électroménager de préparation culinaire multifonctions prévu pour être tenu à la main selon l'une des revendications 1 ou 2, **caractérisé en ce que** les organes de retenue (14) sont portés par une pièce de structure (20) agencée dans le boîtier (1) derrière l'ouverture (13).

4. Boîtier (1) d'appareil électroménager de préparation culinaire multifonctions prévu pour être tenu à la main selon la revendication 3, **caractérisé en ce que** la deuxième sortie d'entraînement (12) traverse la pièce de structure (20).

5. Boîtier (1) d'appareil électroménager de préparation culinaire multifonctions prévu pour être tenu à la main selon la revendication 2 et l'une des revendications 3 ou 4, **caractérisé en ce que** l'extrémité tronconique (17) est formée par un cache annulaire (18) monté sur la pièce de structure (20).

6. Boîtier (1) d'appareil électroménager de préparation culinaire multifonctions prévu pour être tenu à la main selon l'une des revendications 3 à 5, **caractérisé en ce que** la pièce de structure (20) forme une cavité (21) débouchant dans l'ouverture (13), les organes de retenue (14) étant agencés dans la cavité (21).

7. Boîtier (1) d'appareil électroménager de préparation culinaire multifonctions prévu pour être tenu à la main selon l'une des revendications 3 à 6, **caractérisé en ce que** la pièce de structure (20) forme une glissière (22) sur laquelle coulisse une trappe (23) susceptible d'occuper une position ouverte dans laquelle l'ouverture (13) est dégagée et une position fermée dans laquelle l'ouverture (13) est obturée par la trappe (23).

8. Boîtier (1) d'appareil électroménager de préparation culinaire multifonctions prévu pour être tenu à la main selon la revendication 7, **caractérisé en ce que** la glissière (22) présente des nervures de guidage (24), et **en ce que** la trappe (23) présente des encoches de guidage (25) coulissant sur les nervures de guidage (24) lorsque la trappe (23) est déplacée entre la position ouverte et la position fermée, ou vice-versa.

9. Boîtier (1) d'appareil électroménager de préparation culinaire multifonctions prévu pour être tenu à la main selon l'une des revendications 3 à 8, **caractérisé en ce que** la pièce de structure (20) s'étend dans un montant arrière (9) du boîtier (1).

10. Boîtier (1) d'appareil électroménager de préparation culinaire multifonctions prévu pour être tenu à la main selon la revendication 9, **caractérisé en ce que** le boîtier (1) présente une poignée (6) s'étendant à partir du montant arrière (9).

11. Boîtier (1) d'appareil électroménager de préparation culinaire multifonctions prévu pour être tenu à la main selon l'une des revendications 3 à 10, **caractérisé en ce que** le boîtier (1) comporte deux demi-coques extérieures (4 ; 5) et **en ce que** la pièce de structure (20) est maintenue entre les deux demi-coques extérieures (4 ; 5) assemblées.

12. Appareil électroménager de préparation culinaire multifonctions comportant un boîtier (1) prévu pour être tenu à la main et un accessoire de travail (3) amovible configuré pour être monté dans le boîtier (1), l'accessoire de travail (3) comprenant un organe d'entraînement rotatif (31) et un élément de connexion (30), **caractérisé en ce que** le boîtier (1) est conforme à l'une au moins des revendications 1 à 11.

13. Appareil électroménager de préparation culinaire multifonctions selon la revendication 12, **caractérisé en ce que** la partie interne (32) présente des organes d'accrochage internes (37) venant en prise avec les organes de retenue (14) lorsque l'accessoire de travail (3) est monté dans l'ouverture (13).

14. Appareil électroménager de préparation culinaire multifonctions selon l'une des revendications 12 ou 13, **caractérisé en ce que** la partie interne (32) appartient à une paroi annulaire (39) de l'élément de connexion (30).

15. Appareil électroménager de préparation culinaire multifonctions selon la revendication 14, **caractérisé en ce que** la paroi annulaire (39) coiffe la protubérance (15) lorsque l'accessoire de travail (3) est monté dans l'ouverture (13).

## Patentansprüche

1. Gehäuse (1) für eine multifunktionale Haushalts-Lebensmittelzubereitungseinrichtung, das dazu vorgesehen ist, mit der Hand gehalten zu werden, das einen Elektromotor (10) aufnimmt, wobei das Gehäuse (1) mindestens einen und vorzugsweise zwei erste Antriebsausgänge (11) aufweist, der (die) von dem Elektromotor (10) angetrieben wird (werden) und konfiguriert ist (sind), um (jeweils) ein abnehmbares drehendes Arbeitswerkzeug (2) anzutreiben, wobei das Gehäuse (1) eine Öffnung (13) aufweist, die zur Anbringung eines abnehmbaren Arbeitszubehörs (3) konfiguriert ist, wobei das Gehäuse (1) Halteorgane (14) umfasst, die konfiguriert sind, um mit einem Verbindungselement (30) des Arbeitszubehörs (3), das in der Öffnung (13) angebracht ist, in Eingriff zu kommen, wobei das Gehäuse (1) einen zweiten Antriebsausgang (12) umfasst, der von dem Elektromotor (10) angetrieben wird und konfiguriert ist, um ein drehendes Antriebsorgan (31) des Arbeitszubehörs (3), das in der Öffnung (13) angebracht ist, anzutreiben, **dadurch gekennzeichnet, dass** die Halteorgane (14) an einem äußeren Teil (16) eines Vorsprungs (15) angeordnet sind, der im inneren des Gehäuses (1) um den zweiten Antriebsausgang (12) herum angeordnet ist, und dadurch, dass die Halteorgane (14) konfiguriert sind, um mit einem inneren Teil (32) des Verbindungselements (30) in Kontakt zu kommen.

2. Gehäuse (1) für eine multifunktionale Haushalts-Lebensmittelzubereitungseinrichtung, das dazu vorgesehen ist, mit der Hand gehalten zu werden, nach Anspruch 1, **dadurch gekennzeichnet, dass** der Vorsprung (15) ein kegelförmiges Ende (17) aufweist.

3. Gehäuse (1) für eine multifunktionale Haushalts-Lebensmittelzubereitungseinrichtung, das dazu vorgesehen ist, mit der Hand gehalten zu werden, nach Anspruch 1 oder 2, **dadurch gekennzeichnet, dass** die Halteorgane (14) von einem Strukturbauteil (20) getragen werden, das im Gehäuse (1) hinter der Öffnung (13) angeordnet ist.

4. Gehäuse (1) für eine multifunktionale Haushalts-Lebensmittelzubereitungseinrichtung, das dazu vorgesehen ist, mit der Hand gehalten zu werden, nach Anspruch 3, **dadurch gekennzeichnet, dass** der zweite Antriebsausgang (12) das Strukturbauteil (20) durchquert.

5. Gehäuse (1) für eine multifunktionale Haushalts-Lebensmittelzubereitungseinrichtung, das dazu vorgesehen ist, mit der Hand gehalten zu werden, nach Anspruch 2 und einem der Ansprüche 3 oder 4, **dadurch gekennzeichnet, dass** das kegelförmige Ende (17) durch eine ringförmige Abdeckung (18) gebildet wird, die auf dem Strukturbauteil (20) angebracht ist.

6. Gehäuse (1) für eine multifunktionale Haushalts-Lebensmittelzubereitungseinrichtung, das dazu vorgesehen ist, mit der Hand gehalten zu werden, nach einem der Ansprüche 3 bis 5, **dadurch gekennzeichnet, dass** das Strukturbauteil (20) einen Hohlraum (21) bildet, der zur Öffnung (13) führt, wobei die Halteorgane (14) im Hohlraum (21) angeordnet sind.

7. Gehäuse (1) für eine multifunktionale Haushalts-Lebensmittelzubereitungseinrichtung, das dazu vorgesehen ist, mit der Hand gehalten zu werden, nach einem der Ansprüche 3 bis 6, **dadurch gekennzeichnet, dass** das Strukturbauteil (20) eine Schiene (22) bildet, auf der eine Klappe (23) gleitet, die imstande ist, eine offene Position, in der die Öffnung (13) freiliegt, und eine geschlossene Position, in der die Öffnung (13) durch die Klappe (23) verschlossen wird, einzunehmen.

8. Gehäuse (1) für eine multifunktionale Haushalts-Lebensmittelzubereitungseinrichtung, das dazu vorgesehen ist, mit der Hand gehalten zu werden, nach Anspruch 7, **dadurch gekennzeichnet, dass** die Schiene (22) Führungsrippen (24) aufweist, und dadurch, dass die Klappe (23) Führungsrillen (25) aufweist, die auf den Führungsrippen (24) gleiten, wenn die Klappe (23) zwischen der offenen Position und der geschlossenen Position und umgekehrt bewegt wird.

9. Gehäuse (1) für eine multifunktionale Haushalts-Lebensmittelzubereitungseinrichtung, das dazu vorgesehen ist, mit der Hand gehalten zu werden, nach Anspruch 3 bis 8, **dadurch gekennzeichnet, dass** sich das Strukturbauteil (20) in einem hinteren Steg (9) des Gehäuses (1) erstreckt.

10. Gehäuse (1) für eine multifunktionale Haushalts-Lebensmittelzubereitungseinrichtung, das dazu vorgesehen ist, mit der Hand gehalten zu werden, nach Anspruch 9, **dadurch gekennzeichnet, dass** das Gehäuse (1) einen Griff (6) aufweist, der sich ausgehend vom hinteren Steg (9) erstreckt.

11. Gehäuse (1) für eine multifunktionale Haushalts-Lebensmittelzubereitungseinrichtung, das dazu vorgesehen ist, mit der Hand gehalten zu werden, nach einem der Ansprüche 3 bis 10, **dadurch gekennzeichnet, dass** das Gehäuse (1) zwei äußere Halbschalen (4, 5) umfasst, und dadurch, dass das Strukturbauteil (20) zwischen den zwei äußeren Halbschalen (4, 5) gehalten wird.

12. Multifunktionale Haushalts-Lebensmittelzubereitungseinrichtung, umfassend ein Gehäuse, das dazu vorgesehen ist, mit der Hand gehalten zu werden, und ein abnehmbares Arbeitszubehör (3), das konfiguriert ist, um im Gehäuse (1) angebracht zu werden, wobei das Arbeitszubehör (3) ein drehendes Antriebsorgan (31) und ein Verbindungselement (30) umfasst, **dadurch gekennzeichnet, dass** das Gehäuse (1) mit mindestens einem der Ansprüche 1 bis 11 konform ist.

13. Multifunktionale Haushalts-Lebensmittelzubereitungseinrichtung nach Anspruch 12, **dadurch gekennzeichnet, dass** der innere Teil (32) innere Hängeorgane (37) aufweist, die mit den Halteorganen (14) in Eingriff kommen, wenn das Arbeitszubehör (3) in der Öffnung (13) angebracht ist.

14. Multifunktionale Haushalts-Lebensmittelzubereitungseinrichtung nach einem der Ansprüche 12 oder 13, **dadurch gekennzeichnet, dass** der innere Teil (32) zu einer ringförmigen Wand (39) des Verbindungselements (30) gehört.

15. Multifunktionale Haushalts-Lebensmittelzubereitungseinrichtung nach Anspruch 14, **dadurch gekennzeichnet, dass** die ringförmige Wand (39) den Vorsprung (15) bedeckt, wenn das Arbeitszubehör (3) in der Öffnung (13) angebracht ist.

## Claims

1. Housing (1) of a multifunction domestic food preparation appliance that is intended to be handheld, housing an electric motor (10), the housing (1) having at least one and preferably two first driving output(s) (11) driven by the electric motor (10), and configured to (each) drive a removable rotary tool (2), the housing (1) having an opening (13) configured for the mounting of a removable work accessory (3), the housing (1) having retention members (14) configured to engage with a connection element (30) of the work accessory (3) mounted in the opening (13), the housing (1) having a second driving output (12) driven by the electric motor (10) and configured to drive a rotary drive member (31) of the work accessory (3) mounted in the opening (13), **characterised in that** the retention members (14) are arranged on an external part (16) of a protrusion (15) arranged inside the housing (1) around the second driving output (12) and **in that** the retention members (14) are configured to engage with an internal part (32) of the connection element (30).

2. Housing (1) of a multifunction domestic food preparation appliance that is intended to be handheld according to claim 1, **characterised in that** the protrusion (15) has a frustoconical end (17).

3. Housing (1) of a multifunction domestic food preparation appliance that is intended to be handheld according to any one of claims 1 or 2, **characterised in that** the retention members (14) are carried by a structural workpiece (20) arranged in the housing (1) behind the opening (13).

4. Housing (1) of a multifunction domestic food preparation appliance that is intended to be handheld according to claim 3, **characterised in that** the second driving output (12) passes through the structural workpiece (20).

5. Housing (1) of a multifunction domestic food preparation appliance that is intended to be handheld according to claim 2 and any one of claims 3 or 4, **characterised in that** the frustoconical end (17) is formed by an annular cover (18) mounted on the structural workpiece (20).

6. Housing (1) of a multifunction domestic food preparation appliance that is intended to be handheld according to any one of claims 3 to 5, **characterised in that** the structural workpiece (20) forms a cavity (21) opening into the opening (13), the retention members (14) being arranged in the cavity (21).

7. Housing (1) of a multifunction domestic food preparation appliance that is intended to be handheld according to any one of claims 3 to 6, **characterised in that** the structural workpiece (20) forms a slider (22) on which a flap (23) slides, which is able to occupy an open position in which the opening (13) is released and a closed position in which the opening (13) is blocked by the flap (23).

8. Housing (1) of a multifunction domestic food preparation appliance that is intended to be handheld according to claim 7, **characterised in that** the slider (22) has guiding ridges (24), and **in that** the flap (23) has guiding notches (25) sliding on the guiding ridges (24) when the flap (23) is moved between the open position and the closed position, or vice versa.

9. Housing (1) of a multifunction domestic food preparation appliance that is intended to be handheld according to any one of claims 3 to 8, **characterised in that** the structural workpiece (20) extends into a rear upright (9) of the housing (1).

10. Housing (1) of a multifunction domestic food preparation appliance that is intended to be handheld according to claim 9, **characterised in that** the housing (1) has a handle (6) extending from the rear upright (9).

11. Housing (1) of a multifunction domestic food preparation appliance that is intended to be handheld according to any one of claims 3 to 10, **characterised in that** the housing (1) comprises two outer half-shells (4; 5) and **in that** the structural workpiece (20) is held between the two assembled outer half-shells (4; 5).

12. Multifunction domestic food preparation appliance comprising a housing (1) that is intended to be handheld and a removable work accessory (3) configured to be mounted in the housing (1), the work accessory (3) comprising a rotary drive member (31) and a connection element (30), **characterised in that** the housing (1) is according to at least one of claims 1 to 11.

13. Multifunction domestic food preparation appliance according to claim 12, **characterised in that** the internal part (32) has internal fastening members (37) engaging with the retention members (14) when the work accessory (3) is mounted in the opening (13).

14. Multifunction domestic food preparation appliance according to any one of claims 12 or 13, **characterised in that** the internal part (32) belongs to an annular wall (39) of the connection element (30).

15. Multifunction domestic food preparation appliance according to claim 14, **characterised in that** the annular wall (39) crowns the protrusion (15) when the work accessory (3) is mounted in the opening (13).
